# EUROPEAN PATENT APPLICATION

(11) **EP 4 838 626 A1**
(43) Date of publication of application: **11.11.2026**
(21) Application number: 26176870.9
(22) Date of filing: 06.05.2026
(51) Int. Cl.: H01M 10/613, H01M 10/6553, H01M 10/6556

(54) **THERMAL MANAGEMENT SYSTEM FOR A BATTERY**

(30) Priority: 07.05.2025 US 202519201262
(71) Applicant: Pipistrel D.O.O., 5270 Ajdovscina (SI)
(72) Inventor: Pirnar, Jernej, 5270 Ajdovscina (SI); Vrtovec, Ambroz, 5270 Ajdovscina (SI)
(74) Representative: Glück Kritzenberger Patentanwälte PartGmbB

(57) **Abstract**

A thermal management system for a battery includes a conduit configured within a battery module having a frame and tab supports. Each tab support spans across an opening of the frame and supports battery cell tabs of a battery cell. The conduit carries fluid through the frame and the tab supports which causes heat transfer to occur between the fluid and one or more battery cells.

## Description

### BACKGROUND OF TPHE INVENTION

### 1. Field

The disclosed embodiments relate generally to the field of batteries. More specifically, embodiments disclosed herein relate to thermal management of batteries.

### 2. Description of the Related Art

It is known to use a cold plate to provide thermal conditioning for a battery module.

### SUMMARY

This summary is provided to introduce a selection of concepts in a simplified form that are further described below in the detailed description. Other aspects and advantages will be apparent from the following detailed description of the embodiments and the accompanying drawing figures.

In certain embodiments, a thermal management system for a battery cell includes: a conduit network configured to carry a fluid, the conduit network being integrated within a battery module, the battery module including a frame and a plurality of tab supports attached to the frame; wherein the plurality of tab supports span across an opening of the frame and are attached to and provide support for a plurality of battery cell tabs extending from a plurality of battery cells of the battery module; and wherein the conduit network is integrated within the plurality of tab supports such that, in use, heat transfer occurs between the fluid and the battery cells.

In certain embodiments, the conduit network includes a distribution manifold and a collection manifold, both integrated into the frame.

In certain embodiments, the conduit network further includes a plurality of channels integrated into the plurality of tab supports, wherein the plurality of channels fluidly connect the distribution manifold and the collection manifold.

In certain embodiments, the distribution manifold and the collection manifold are recessed into a top portion and a bottom portion of the frame, respectively.

In certain embodiments, a fluid inlet is configured to allow fluid to enter the distribution manifold and a fluid outlet is configured to allow fluid to exit the collection manifold.

In certain embodiments, the fluid inlet is disposed on one end of the battery module and the fluid outlet is disposed on an opposite end of the battery module, such that fluid flows through the conduit network in a Z-type flow configuration.

In certain embodiments, the fluid inlet and the fluid outlet are disposed on the same end of the battery module, such that fluid flows through the conduit network in a U-type flow configuration.

In certain embodiments, the plurality of battery cell tabs each include an L-shaped end configured to be bonded to a respective one of the plurality of tab supports.

In certain embodiments, the frame includes a top portion and a bottom portion joined together, and wherein the conduit network includes recesses formed in the top portion and the bottom portion that cooperate to define the conduit network when the top and bottom portions are joined.

In certain embodiments, the frame includes a plurality of slots on a surface thereof, each slot receiving a respective one of the plurality of tab supports such that the tab supports are insertable into and attachable to the frame.

In certain embodiments, the battery module includes a plurality of lithium-ion battery cells.

In certain embodiments, the tab supports and the battery cell tabs are fabricated from a thermally conductive material, and wherein the frame is fabricated from an electrically non-conductive polymer material.

In certain embodiments, a method of manufacturing a thermal management system for a battery cell includes: integrating a conduit network into a battery module including a frame, wherein integrating includes forming a distribution manifold and a collection manifold in the frame; integrating the conduit network into a plurality of tab supports by forming a plurality of channels in the tab supports, wherein the plurality of channels fluidly connect the distribution manifold and the collection manifold, and wherein the conduit network is configured to carry a fluid for heat transfer with the battery cell; attaching the plurality of tab supports to the frame such that the tab supports span across an opening of the frame; and bonding a plurality of battery cell tabs of the battery module to the plurality of tab supports.

In certain embodiments, the method includes fabricating the plurality of tab supports and the plurality of channels using an additive manufacturing technique.

In certain embodiments, the method includes fabricating the frame from a polymer, and joining a top portion and a bottom portion of the frame together using a welding technique to form the distribution manifold and the collection manifold.

### BRIEF DESCRIPTION OF THE SEVERAL VIEWS OF THE DRAWINGS

Illustrative embodiments are described in detail below with reference to the attached drawing figures, which are incorporated by reference herein and wherein:
FIG. 1 is a perspective view of a battery module having a thermal management system in accordance with embodiments of the present disclosure;
FIG. 2 is a perspective view of a battery pack with an outer shell housing the battery module of FIG. 1;
FIG. 3 is a close-up partially exploded view of a frame with tab supports contacting battery cell tabs of the battery module of FIG. 1;
FIG. 4A is a perspective view of an upper portion of the frame of FIG. 3;
FIG. 4B is a perspective view of a lower portion of the frame of FIG. 3;
FIG. 5 is a perspective view of a conduit network of the thermal management system of FIG. 1;
FIG. 6 is a close-up perspective view of the conduit network of FIG. 5;
FIG. 7 is a cross-sectional view of the thermal management system of FIG. 1;
FIG. 8 is a block diagram of a method of manufacture for the thermal management system of FIG. 1; and
FIG. 9 is a cross-sectional view of the thermal management system of FIG. 1.

The drawing figures do not limit the invention to the specific embodiments disclosed and described herein. The drawings are not necessarily to scale, emphasis instead being placed upon clearly illustrating the principles of the invention.

### DETAILED DESCRIPTION

The following detailed description references the accompanying drawings that illustrate specific embodiments in which the invention can be practiced. The embodiments are intended to describe aspects of the invention in sufficient detail to enable those skilled in the art to practice the invention. The following detailed description is, therefore, not to be taken in a limiting sense. The scope of the invention is defined only by the appended claims.

In this description, references to "one embodiment," "an embodiment," or "embodiments" mean that the feature or features being referred to are included in at least one embodiment of the technology. Separate references to "one embodiment," "an embodiment," or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the technology can include a variety of combinations and/or integrations of the embodiments described herein.

Embodiments disclosed herein provide systems and a method for having a thermal management system for a battery cell. Batteries and specifically, lithium-ion type batteries are required to be maintained within a temperature range for optimal performance. When batteries operate outside of their optimal temperature range (which may be approximately twenty degrees Celsius to forty degrees Celsius), their performance, safety, and lifespan may be adversely impacted. Currently, cold plates may be arranged on top of and beneath a battery to maintain the temperature of the battery. A system is needed which provides thermal management for a battery without the added structure of a cold plate, and which provides uniform temperature dispersion throughout the battery.

Embodiments herein disclose a thermal management system which substantially controls the temperature of one or more battery cells housed within a housing. The thermal management system includes a conduit that carries fluid between a fluid inlet and a fluid outlet. The conduit may be arranged in portions of the one or more battery cells such that the fluid flowing through the conduit provides heat transfer for controlling temperature of the one or more battery cells.

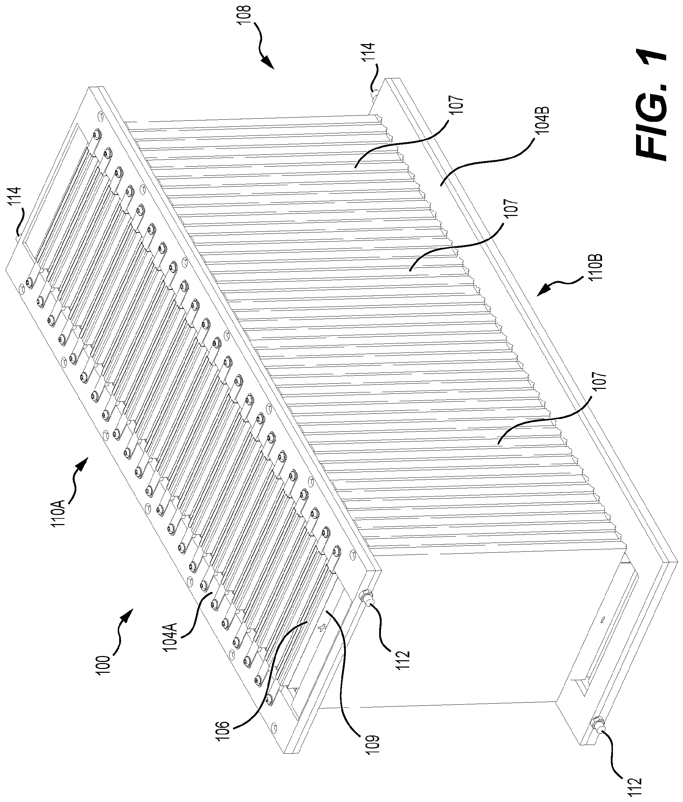

With reference to FIGs. 1-9 and the description below, a thermal management system 100 is shown and described. With reference to FIG. 1, the thermal management system 100 is disposed within a battery module 108. The battery module 108 includes a pair of frames 104A and 104B, and a plurality of tab supports 106 which attach to each of the frames 104A and 104B. In embodiments, the tab supports 106 are configured to span across an opening of the frames 104A and 104B and support a plurality of battery cell tabs 109 which extend from a plurality of battery cells 107 of battery module 108. A pair of conduit networks 110A and 110B are disposed within the battery module 108. The conduit networks 110A and 110B are each configured to transfer fluid between a fluid inlet 112 and a fluid outlet 114. The conduit networks 110A and 110B are disposed within the frames 104A and 104B and tab supports 106. When fluid flows through portions of the conduit networks 110A and 110B disposed within the tab supports 106, heat transfer between the fluid and the battery cell tabs 109 is provided due to direct contact between the tab supports 106 and the battery cell tabs 109. In embodiments, the conduit network 110A is disposed onto a top side of the battery module 108 and the conduit network 110B is disposed onto a bottom side of the battery module 108. It should be recognized that embodiments herein may be employed with use of only one of conduit networks 110A or 110B.

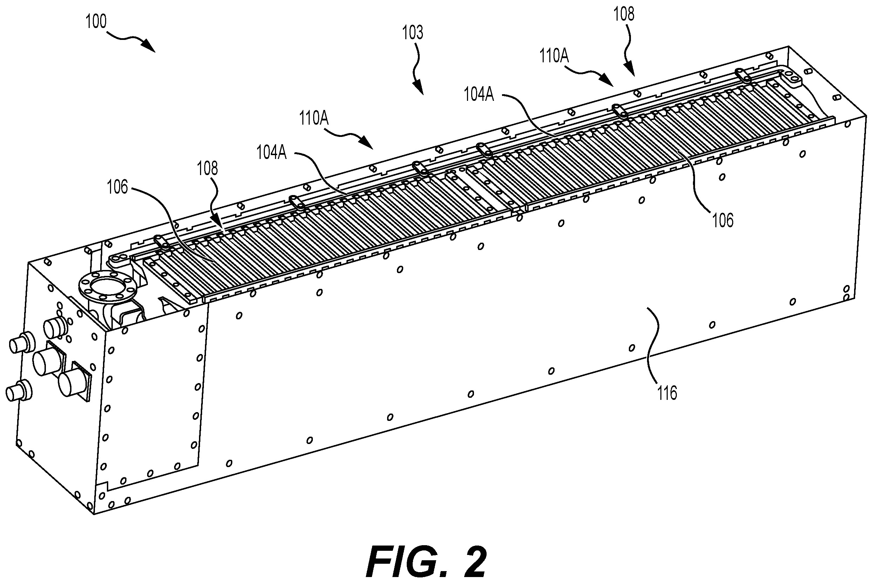

In embodiments, and shown in FIG. 2, the battery modules 108 are disposed into a battery pack 103 which includes an outer shell 116. In embodiments, two battery modules 108 are shown in the pack 103 within the outer shell 116 and may be operatively connected together. In other embodiments, the shell 116 may house one, or more than one of battery modules 108. In embodiments, the pair of frames 104A and 104B are disposed against upper and lower edges of the shell 116 such that the battery module 108 is positioned in between the frames 104A and 104B. FIG. 1 shows a view with the outer shell 116 removed to more clearly reveal the battery module 108 and the frames 104A and 104B. The sides of each frame 104A and 104B create an opening revealing the battery module 108 and the plurality of battery cells 107 in the center of frames 104A and 104B. In this way, the battery cell tabs 109 extend upwards from the battery cells 107 towards the opening of each frame 104A and 104B and are supported by tab supports 106. The tab supports 106 are fastened to the frames 104A and 104B and span across the opening of each frame 104A and 104B. In embodiments, the tab supports 106 are spaced apart in substantially equal increments along the sides of the frames 104A and 104B. In embodiments, the incremental spacing of the tabs along the entire length of the frames 104A may allow for substantially uniform heat transfer for the battery module 108. In embodiments, the plurality of battery cells 107 may be lithium-ion type battery cells.

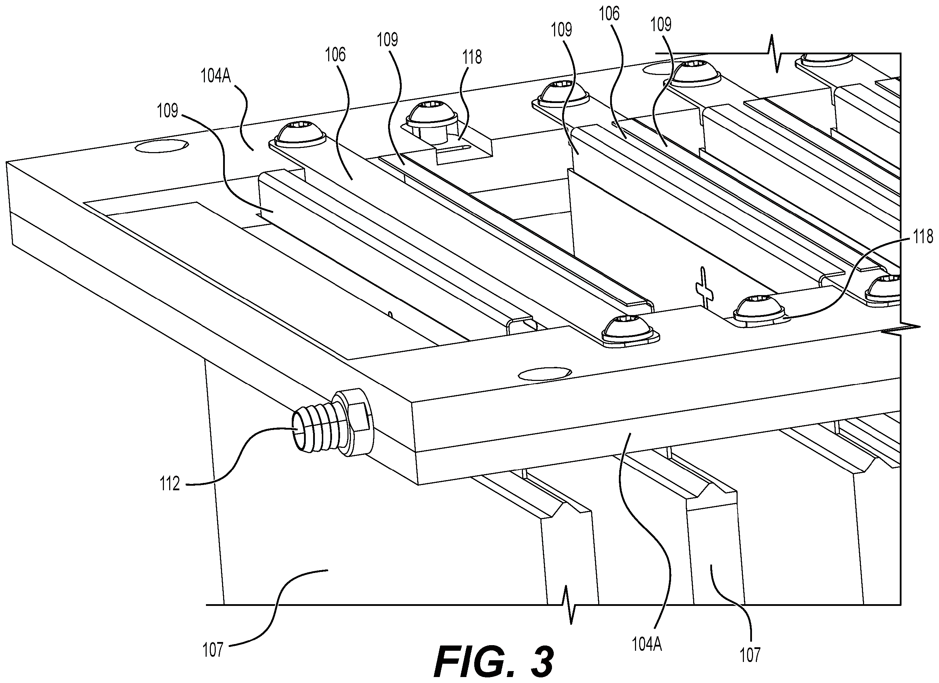

FIG. 3 shows a partially exploded view of thermal management system 100 with components removed to reveal the battery cell tabs 109 spaced away from the tab supports 106. The tab supports 106 are attached to opposing sides of each frame 104A and 104B. In embodiments, the tab supports 106 may be configured to insert into a slot 118 disposed into an outer facing edge of each frame 104A and 104B. In embodiments, the tab supports 106 may insert into the slot 118 such that the outer facing surface of the tab support 106 is substantially flush with the surface of the frames 104A and 104B. In some instances, bolts or screws may secure the tab supports 106 to the frames 104A and 104B. In embodiments, the plurality of battery cells 107 of battery module 108 include battery cell tabs 109 which extend away from each battery cell 107. The upper ends of the battery cell tabs 109, which contact the tab supports 106, are configured with an L-shape such that one leg of the L extends over the outer face of a tab support 106. In embodiments, the battery cell tabs 109 and tab supports 106 may be bonded together using welding techniques.

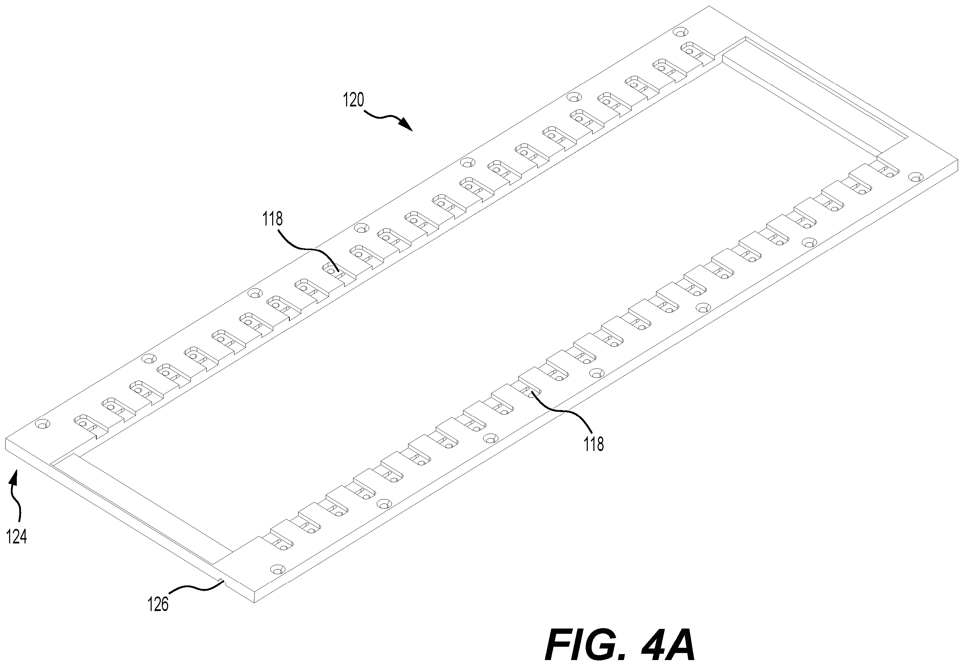

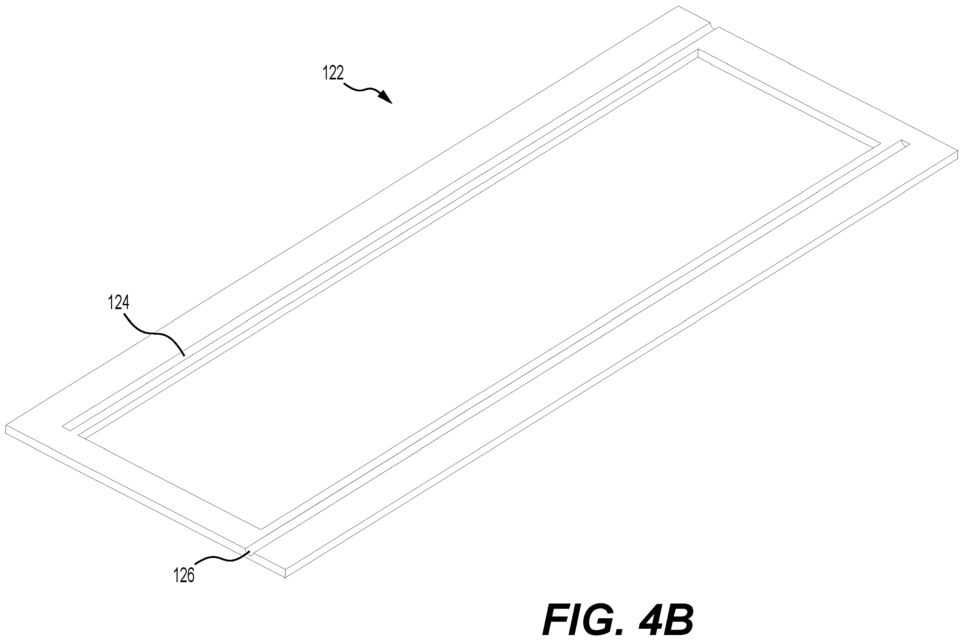

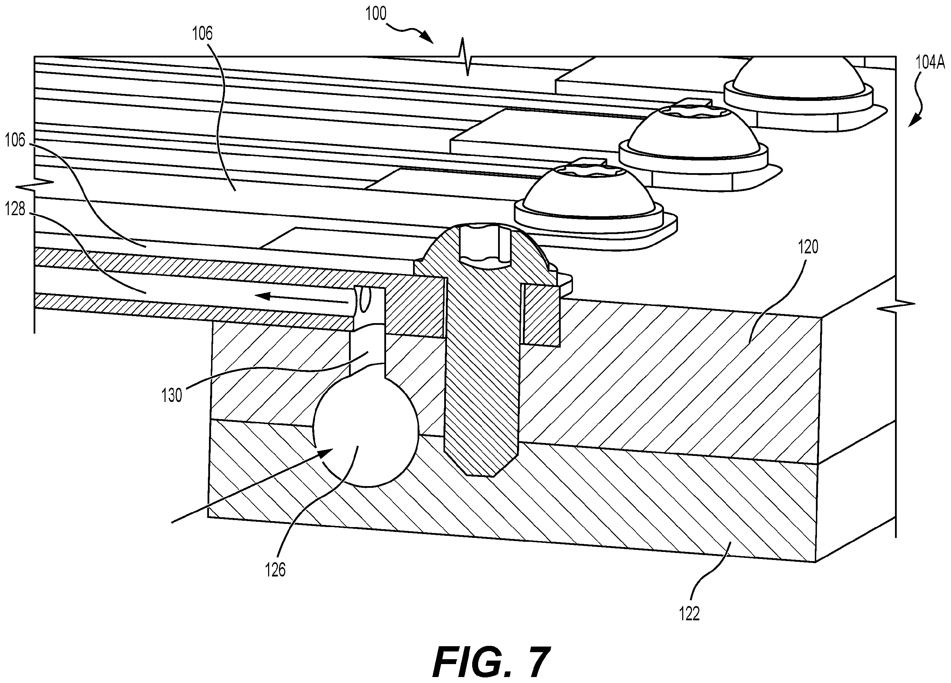

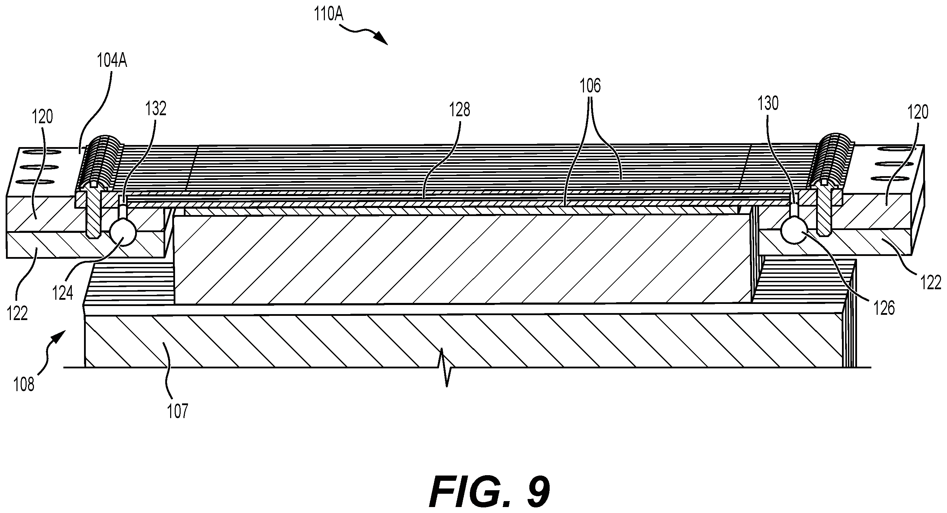

With reference to FIGs. 4A and 4B each of the frames 104A and 104B include an upper portion 120 and a lower portion 122. The upper portion 120, shown in FIG. 4A, includes the slots 118 for receiving the tab supports 106. In embodiments, the slots 118 are spaced apart in substantially equal increments along opposing sides of the portion 120. In some embodiments, the upper portion 120 and lower portion 122 (see FIG. 4B) when bonded together form a collection manifold 124 and a distribution manifold 126 of the conduit networks 110A and 110B. In embodiments, portions of the collection manifold 124 and the distribution manifold 126 are recessed into an upper facing surface of the lower portion 122 and into a downwards facing surface of the upper portion 120. The portions of the manifolds 124 and 126 are positioned to align when the upper portion 120 and lower portion 122 are bonded together to form each of frames 104A and 104B. The portions of the manifolds 124 and 126 are substantially rounded grooves or channels recessed into the portions 120 and 122 such that when the frames 104A and 104B are bonded together (see FIGs. 7 and 9), the manifolds 124 and 126 have a tubelike shape. In embodiments, the frames 104A and 104B including portions 120 and 122 may be fabricated from a polymer and formed using vibration welding of polymer injection-molded halves.

With reference to FIG. 9, the conduit network 110A is integrated into the frame 104A and tab supports 106 via recesses. In some embodiments, the manifolds 124 and 126 may be formed using machining methods such as milling, and the channels 128 may be formed using metal extrusion or additive manufacturing. Extensions 130 and 132 are recessed into the upper portion 120 of the frames 104A and 104B. The extensions 132 extend away from the collection manifold 124 and the extensions 130 extend away from the distribution manifold 126. The extensions 130 and 132 connect the manifolds 124 and 126 to recessed channels 128 formed into the tab supports 106. The recessed channels 128 connect the distribution manifold 126 to the collection manifold 124 such that fluid may flow from the distribution manifold 126 to the collection manifold 124. When the fluid is in the channels 128, the fluid flows through and contacts the internal faces of the channels 128.

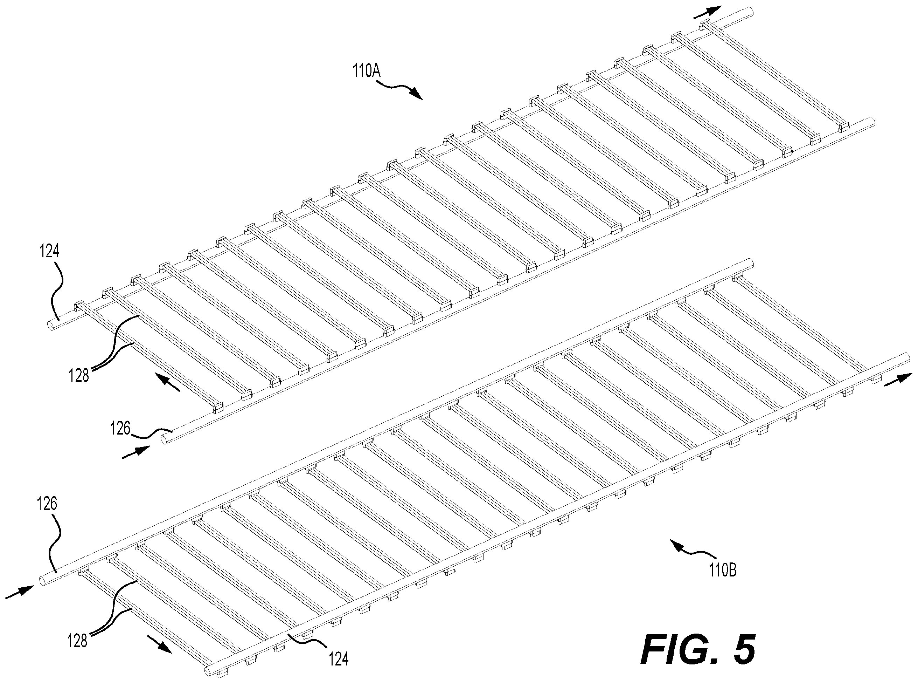

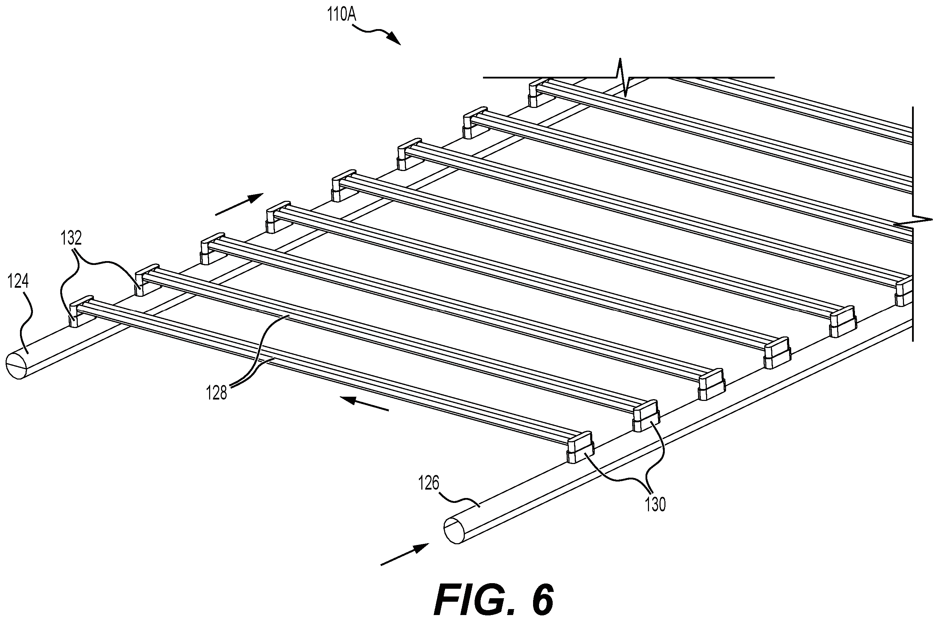

FIGs. 5 and 6 provide a view of the conduit networks 110A and 110B removed from the battery module 108 in an embodiment. It should be recognized that the conduit networks 110A and 110B are not separable from the frames 104A and 104B and are recessed or formed into the frames 104A and 104B. FIGs. 5 and 6 are exemplary in providing a view of the networks 110A/110B to better illustrate the configuration of the networks formed into the frames 104A/104B. The conduit networks 110A and 110B are tube or conduit structures formed or recessed into the frames 104A and 104B positioned on the bottom and top sides of the battery module 108 (see FIG. 1). In this way, heat transfer may be provided by the fluid in the conduit networks 110A and 110B to the battery module 108 on upper and lower sides. The conduit networks 110A and 110B and specifically upper portion 120 and lower portion 122 of frames 104A and 104B may be formed from an electrically non-conductive material and may substantially be formed to have a type of tubing or piping. In embodiments, heat transfer may occur between the fluid, the tab supports 106, and the battery cell tabs 109 which directly contact the tab supports 106. In this way, the fluid in the channels 128 within the tab supports 106 provides heat transfer for the battery module 108. In embodiments, the temperature of the battery module 108 may be substantially controlled due to the cooling and heating provided by the fluid flowing through conduit networks 110A and 110B. This is advantageous because the battery module 108 may be maintained in a temperature range which corresponds to optimal battery performance. After the fluid flows through the channels 128, the fluid flows into extensions 132 and into the collection manifold 124. From the collection manifold 124 the fluid may flow out of the fluid outlet 114. In embodiments, the fluid may be a dielectric fluid in a liquid or gaseous state and may be heated or cooled to substantially provide heating or cooling for the battery module 108. In embodiments, the tab supports 106 and battery cell tabs 109 may be fabricated from a thermally conductive material such that heat transfer may occur between the fluid in the channels 128 and the battery module 108. In embodiments, the tab supports 106 with channels 128 may be manufactured using an additive manufacturing technique such as 3D printing.

In the embodiments shown in FIGs. 5, 6 and 7, the conduit networks 110A and 110B have a Z-type flow configuration. In a Z-type flow configuration, the fluid inlet 112 is positioned on an end of the battery module 108 opposite of the fluid outlet 114. In this way, the fluid flows into the distribution manifold 126 on one side of the frame 104A/104B, across the frame within the channels 128, into the collection manifold 124 on the opposite side of the frame 104A/104B, and then flows out of the fluid outlet 114 disposed on the opposite side and end than the fluid inlet 112. In some embodiments, the conduit networks 110A and 110B may have a U-type flow configuration. In a U-type flow configuration (not shown) the fluid inlet 112 and the fluid outlet 114 are disposed onto opposite sides of the same end of the battery module 108. In this way, the fluid flows into the distribution manifold 126 on one side of the frame 104A/104B, across the frame within the channels 128, into the collection manifold 124 on the opposite side of the frame, and then out of the fluid outlet 114 disposed on the same end as the fluid inlet 112.

In operation, the thermal management system 100 may be used to lower the temperature of the battery module 108. To lower the temperature of battery module 108, a relatively cool fluid may be injected into the fluid inlets 112 for fluid to flow into the conduit networks 110A and 110B. The fluid flows from the inlet 112 into the distribution manifold 126. From the distribution manifold 126, the fluid may flow into the extensions 130 and into the channels 128. In the channels 128, the fluid may provide cooling for the battery module 108 due to the thermal conductivity between the channels 128, tab supports 106, and battery cell tabs 109. When the fluid exits channels 128 into the extensions 132, the fluid may have a higher temperature than when it entered the channels 128 due to the heat from the battery module 108 thermally conducting through the battery cell tabs 109, tab supports 106, and channels 128 into the fluid. The fluid flows into the collection manifold 124, to the fluid outlets 114, and out of the thermal management system 100. In this way, the plurality of battery cells 107 of battery module 108 are substantially cooled. In operation, the battery module 108 may also be heated in a similar fashion if the fluid injected into the fluid inlet 112 is relatively warm. The configuration of the conduit networks 110A and 110B within the frames 104A and 104B disposed against opposing ends of the battery module 108 substantially allows for heat transfer to occur from each end of the battery module 108. In this way the temperature control of the battery may be achieved substantially uniformly. It should be recognized that a single frame 104A/104B or a single conduit network110A/110B may be employed without departing from the scope of embodiments herein.

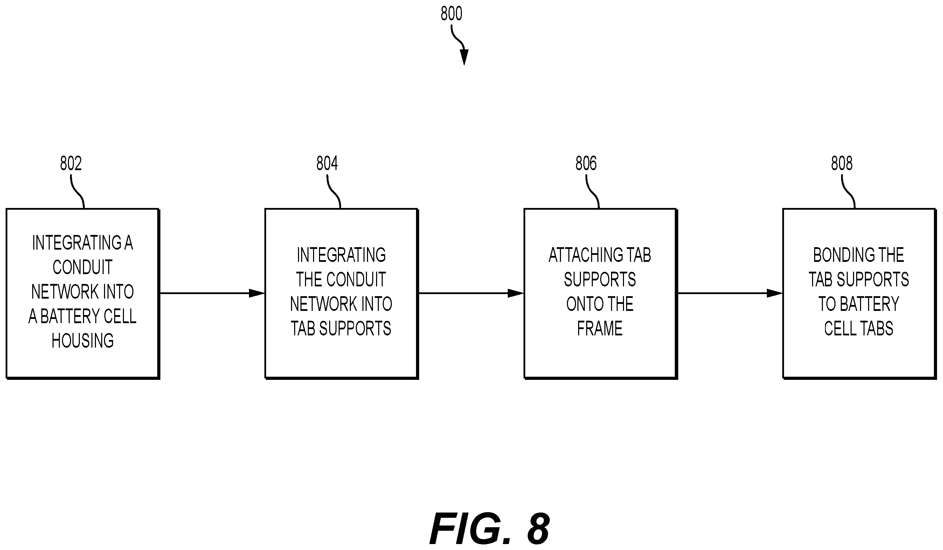

FIG. 8 shows a method of manufacture 800 for thermal management system 100.

A step 802 comprises integrating a conduit network into a battery module. For example, the conduit networks 110A and 110B may be integrated into the frames 104A and 104B to form the collection manifold 124 and distribution manifold 126, respectively. The frames 104A and 104B are disposed on an outer edge of the battery module 108 on opposing ends. The conduit networks 110A and 110B may include the recessed portions such as manifolds 124 and 126 recessed into the frames 104A and 104B.

A step 804 comprises integrating the conduit network into tab supports. For example, the channels 128 of the conduit networks 110A and 110B may be integrated into the tab supports 106. The channels 128 are configured to connect the distribution manifold 126 and the collection manifold 124 such that fluid may flow from the distribution manifold 126 to the collection manifold 124. The channels 128 allow for heat transfer between the fluid and the plurality of battery cells 107 of battery module 108. Heat transfer may occur between the fluid and the battery module 108 when fluid flow provides heating or cooling to the battery cells 107 through the battery cell tabs 109 bonded onto the tab supports 106.

A step 806 comprises attaching the plurality of tab supports onto the frame. For example, the tab supports 106 may be attached to the frames 104A and 104B and are configured to span each frame. In embodiments, the tab supports 106 may be spaced in increments along the frames 104A and 104B for aligning with each individual battery cell 107 of battery module 108. The tab supports 106 may be inserted into slots 118 formed into an outer surface of the frames.

A step 808 comprises bonding the plurality of battery cell tabs onto a plurality of tab supports. For example, the battery cell tabs 109 may be welded to the tab supports 106. The tab supports 106 and battery cell tabs 109 may be fabricated from a thermally conductive material. The battery cell tabs 109 may comprise an L-shape configured to mount onto the tab supports 106. The tab supports 106 are configured to provide mechanical support for holding the battery cell tabs 109.

Embodiments have been described with the intent to be illustrative rather than restrictive. Alternative embodiments will become apparent to those skilled in the art that do not depart from what is disclosed. A skilled artisan may develop alternative means of implementing the aforementioned improvements.

It will be understood that certain features and subcombinations are of utility and may be employed without reference to other features and subcombinations. Not all steps listed in the various figures need be carried out in the specific order described.

## Claims

1. A thermal management system for a battery cell, the system comprising:
a conduit network configured to carry a fluid, the conduit network being integrated within a battery module, the battery module comprising a frame and a plurality of tab supports attached to the frame;
wherein the plurality of tab supports span across an opening of the frame and are attached to and provide support for a plurality of battery cell tabs extending from a plurality of battery cells of the battery module; and
wherein the conduit network is integrated within the plurality of tab supports such that, in use, heat transfer occurs between the fluid and the battery cells.

2. The system of claim 1, wherein the conduit network comprises a distribution manifold and a collection manifold, both integrated into the frame.

3. The system of claim 2, wherein the conduit network further comprises a plurality of channels integrated into the plurality of tab supports, wherein the plurality of channels fluidly connect the distribution manifold and the collection manifold.

4. The system of claim 2 or claim 3, wherein the distribution manifold and the collection manifold are recessed into a top portion and a bottom portion of the frame, respectively.

5. The system of any one of claims 2 to 4, wherein a fluid inlet is configured to allow fluid to enter the distribution manifold and a fluid outlet is configured to allow fluid to exit the collection manifold.

6. The system of claim 5, wherein the fluid inlet is disposed on one end of the battery module and the fluid outlet is disposed on an opposite end of the battery module, such that fluid flows through the conduit network in a Z-type flow configuration.

7. The system of claim 5, wherein the fluid inlet and the fluid outlet are disposed on the same end of the battery module, such that fluid flows through the conduit network in a U-type flow configuration.

8. The system of any preceding claim, wherein the plurality of battery cell tabs each comprise an L-shaped end configured to be bonded to a respective one of the plurality of tab supports.

9. The system of any preceding claim, wherein the frame comprises a top portion and a bottom portion joined together, and wherein the conduit network comprises recesses formed in the top portion and the bottom portion that cooperate to define the conduit network when the top and bottom portions are joined.

10. The system of any preceding claim, wherein the frame includes a plurality of slots on a surface thereof, each slot receiving a respective one of the plurality of tab supports such that the tab supports are insertable into and attachable to the frame.

11. The system of any preceding claim, wherein the battery module comprises a plurality of lithium-ion battery cells.

12. The system of any preceding claim, wherein the tab supports and the battery cell tabs are fabricated from a thermally conductive material, and wherein the frame is fabricated from an electrically non-conductive polymer material.

13. A method of manufacturing a thermal management system for a battery cell, the method comprising:
integrating a conduit network into a battery module comprising a frame, wherein integrating comprises forming a distribution manifold and a collection manifold in the frame;
integrating the conduit network into a plurality of tab supports by forming a plurality of channels in the tab supports, wherein the plurality of channels fluidly connect the distribution manifold and the collection manifold, and wherein the conduit network is configured to carry a fluid for heat transfer with the battery cell;
attaching the plurality of tab supports to the frame such that the tab supports span across an opening of the frame; and
bonding a plurality of battery cell tabs of the battery module to the plurality of tab supports.

14. The method of claim 13, comprising fabricating the plurality of tab supports and the plurality of channels using an additive manufacturing technique.

15. The method of claim 13 or claim 14, comprising fabricating the frame from a polymer, and joining a top portion and a bottom portion of the frame together using a welding technique to form the distribution manifold and the collection manifold.
